# EUROPEAN PATENT SPECIFICATION

(11) **EP 2 888 863 B1**
(45) Date of publication and mention of the grant of the patent: **10.10.2018**
(21) Application number: 12883334.0
(22) Date of filing: 24.08.2012
(51) Int. Cl.: H04L 29/12

(54) **METHOD AND APPARATUS FOR CONFIGURING DHCP CLIENT**
VERFAHREN UND VORRICHTUNG ZUR KONFIGURIERUNG EINES DHCP-CLIENTS
PROCÉDÉ ET APPAREIL DE CONFIGURATION D'UN CLIENT DHCP

(43) Date of publication of application: 01.07.2015
(73) Proprietor: Thomson Licensing, 92130 Issy-les-Moulineaux (FR)
(72) Inventor: ZHANG, Wei, Beijing 100192 (CN)
(74) Representative: Vidon Brevets & Stratégie
(86) International application number: PCT/CN2012/080566
(87) International publication number: WO 2014/029110

(56) References cited:
- WO-A1-2008/032014
- CN-A- 101 453 495
- CN-A- 101 600 001
- US-A1- 2006 250 982
- US-A1- 2008 109 539
- US-A1- 2009 034 540
- DROMS BUCKNELL UNIVERSITY R: "Dynamic Host Configuration Protocol; rfc2131.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 March 1997 (1997-03-01), XP015007915, ISSN: 0000-0003
- HUAWEI TECHNOLOGIES CO LTD.: 'DHCP Technology White Paper.' BAIDU LIBRARY. 22 March 2010, pages 3, 4, 7, 8, 10, 19 AND 28 - 30, XP008176376

## Description

### TECHNICAL FIELD

The present invention relates to data communication, and more particularly, relates to a method and an apparatus for configuring DHCP client.

### BACKGROUND

The Dynamic Host Configuration Protocol (DHCP) is a network protocol that is used to configure network devices so that they can communicate on an IP network. A DHCP client uses the DHCP protocol to acquire necessary client configuration parameters, including network address (normally, it's IP address), subnet mask, default gateway and one or more DNS server addresses etc. from a DHCP server. The DHCP client then uses these configuration parameters to configure its host. Once the configuration process is complete, the DHCP client is able to communicate on the IP network. Normally, the IP address is granted by the DHCP server to the DHCP client for a limited interval, which is called lease. It means that only in the lease the allocation of IP address is valid. Before the lease expires, the DHCP client is responsible for renewing its IP address; and, if it has not been able to renew it, it must stop using the address once the lease has expired

The DHCP server maintains the client configuration parameters for all potential DHCP clients, comprising a database of available IP addresses. When it receives a request from a DHCP client, the DHCP server determines the network to which the DHCP client is connected, and then allocates an IP address or prefix that is appropriate for the DHCP client, and sends client configuration parameter appropriate for that client including the allocated IP address or prefix.

Because the DHCP protocol must work correctly even before DHCP clients have been configured, the DHCP server and DHCP client must be connected to the same network link. In larger networks, this is not practical. In such networks, each network link contains one or more DHCP relay agents. These DHCP relay agents receive messages from DHCP clients and forward them to DHCP servers. DHCP servers send responses back to the relay agent, and the relay agent then sends these responses to the DHCP client on the local network link.

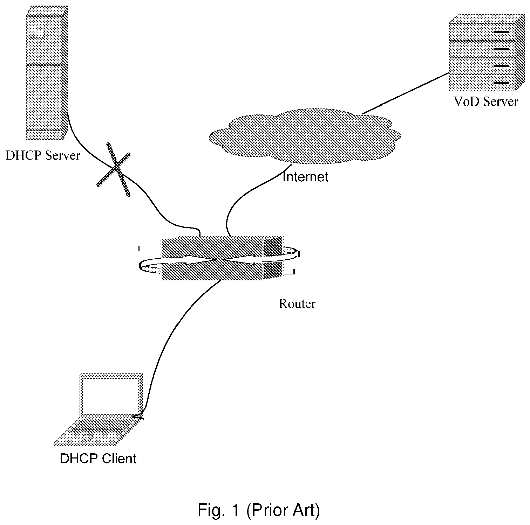

Fig. 1 is a diagram illustrating an example of an actual utilization of DHCP protocol according to prior art. A DHCP server and a DHCP client are connected via a router, and a Video on Demand (VoD) server is connected to the router through Internet. The client obtains necessary client configuration parameters from the DHCP server first, and then uses these parameters to communicate with the VoD server on the IP layer in order to get video content from it. However, sometimes, the DHCP server becomes unreachable so that the DHCP client cannot renew its lease, which will consequently affect the data service between the VoD server and the DHCP client. The reasons why the DHCP server is unreachable include the data link between the DHCP client and the DHCP server is broken (as Fig. 1 shows, the link between the DHCP server and the router is broken), the DHCP server is down etc.

Therefore, it's desirable not to affect the data service when the DHCP server becomes unreachable for lease renewal.

WO2008/032014 discloses failover to link local address in case of the DHCP server becoming unreachable.

### SUMMARY

The invention is defined by the subject-matter of the independent claims.

It is to be understood that more aspects and advantages of the invention will be found in the following detailed description of the present invention.

### BRIEF DESCRIPTION OF THE DRAWINGS

The accompanying drawings, which are included to provide a further understanding of the present invention, illustrate embodiments of the invention together with the description which serves to explain the principle of the invention. Therefore, the invention is not limited to the embodiments. In the drawings:
Fig. 1 is a diagram illustrating an example of a practical utilization of DHCP protocol according to prior art;
Fig. 2 is a diagram illustrating finite state transition for DHCP client according to prior art.
Fig. 3 is a block diagram of DHCP client according to an embodiment of present invention. And
Fig. 4 is a flow chart illustrating a method for configuring DHCP client when the DHCP client fails to renew its lease according to the embodiment of present invention.

### DETAILED DESCRIPTION

An embodiment of the present invention will now be described in detail in conjunction with the drawings. In the following description, some detailed descriptions of known functions and configurations may be omitted for clarity and conciseness.

The principle of the present invention intends to provide a method for configuring a DHCP client when the DHCP client fails to renew the lease from a DHCP server, without the need of changing the existing DHCP protocols as defined mainly in RFC2131 (Dynamic Host Configuration Protocol), RFC2132 (DHCP Options and BOOTP Vendor Extensions) and RFC3046 (DHCP Relay Agent Information Option). It shall note besides RFC2132, other standard documents also describe DHCP Options, for example, RFC3004, RFC2610, RFC4039, RFC4702, RFC3046, RFC3442 etc. In other words, it means in order to deploy the principle of the present invention, it does not to modify the DHCP protocols in the DHCP server, and consequently the present invention can be easily deployed in the existing DHCP

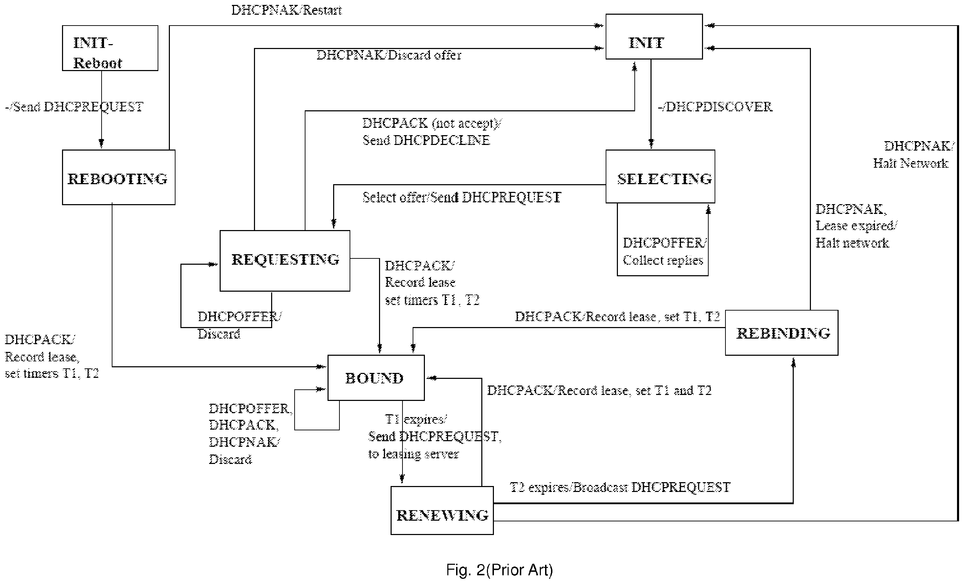

Before introducing the principle of the present invention, some description necessary for understanding the present invention is introduced with reference to the state-transition diagram for DHCP clients as defined in RFC2131. As can be seen from the Fig. 2, states for describing the lease life cycle from the perspective of the DHCP client include INIT-Reboot, REBOOTING, INIT, REQUESTING, SELECTING, BOUND, REBINDING and RENEWING. The DHCP client begins in an initial INIT state where it has no lease, and then transitions through various states as it acquires, renews, rebinds and/or releases the IP address allocated by the DHCP server to it. The table 1 below briefly shows states, events causing transitions to occur and transitions. More details can be found in RFC 2131.

**Table 1: DHCP Client Finite State Machine**

| **State** | **State Description** | **Event and Transition** |
|---|---|---|
| ***INIT*** | This is the initialization state, where a client begins the process of acquiring a lease. It also returns here when a lease ends, or when a lease negotiation fails. | **Client Sends *DHCPDISCOVER*:** The client creates a *DHCPDISCOVER* message and broadcasts it to try to find a DHCP server. It transitions to the *SELECTING* state. |
| ***SELECTING*** | The client is waiting to receive *DHCPOFFER* messages from one or more DHCP servers, so it can choose one. | **Client Receives Offers, Selects Preferred Offer, Sends *DHCPREQUEST:*** The client chooses one of the offers it has been sent, and broadcasts a *DHCPREQUEST* message to tell DHCP servers what its choice was. It transitions to the *REQUESTING* state. |
| ***REQUESTING*** | The client is waiting to hear back from the server to which it sent its request. | **Client Receives DHCPACK, Successfully Checks That IP Address Is Free:** The client receives a *DHCPACK* message from its chosen server, confirming that it can have the lease that was offered. It checks to ensure that address is not already used, and assuming it is not, records the parameters the server sent it, sets the lease timers *T1* and *T2,* and transitions to the *BOUND* state. |
| | | **Client Receives *DHCPACK*, But IP Address Is In Use:** The client receives a *DHCPACK* message from its chosen server, confirming that it can have the lease that was offered. However, it checks and finds the address already in use. It sends a *DHCPDECLINE* message back to the server, and returns to the *INIT* state. |
| | | **Client Receives *DHCPNAK:*** The client receives a *DHCPNAK* message from its chosen server, which means the server has withdrawn its offer. The client returns to the *INIT* state. |
| ***INIT-REBOOT*** | When a client that already has a valid lease starts up after a power-down or reboot, it starts here instead of the *INIT* state. | **Client Sends *DHCPREQUEST:*** The client sends a *DHCPREQUEST* message to attempt to verify its lease and re-obtain its configuration parameters. It then transitions to the *REBOOTING* state to wait for a response. |
| ***REBOOTING*** | A client that has rebooted with an assigned address is waiting for a confirming reply from a server. | **Client Receives DHCPACK, Successfully Checks That IP Address Is Free:** The client receives a *DHCPACK* message from the server that has its lease information, confirming that the lease is still valid. To be safe, the client checks anyway to ensure that the address is not already in use by some other device. Assuming it is not, the client records the parameters the server sent it and transitions to the *BOUND* state. |
| | | **Client Receives DHCPACK, But IP Address Is In Use:** The client receives a *DHCPACK* message from the server that had its lease, confirming that the lease is still valid. However, the client checks and finds that while the client was offline, some other device has grabbed its leased IP address. The client sends a *DHCPDECLINE* message back to the server, and returns to the *INIT* state to obtain a new lease. |
| | | **Client Receives *DHCPNAK:*** The client receives a *DHCPNAK* message from a server. This tells it that its current lease is no longer valid; for example, the client may have moved to a new network where it can no longer use the address in its present lease. The client returns to the *INIT* state. |
| ***BOUND*** | Client has a valid lease and is in its normal operating state. | **Renewal Timer (*T1*) Expires:** The client transitions to the *RENEWING* state. |
| | | **Client Terminates Lease, Sends *DHCPRELEASE:*** The client decides to terminate the lease (due to user command, for example.) It sends a *DHCPRELEASE* message and returns to the *INIT* state. |
| ***RENEWING*** | Client is trying to renew its lease. It regularly sends *DHCPREQUEST* messages with the server that gave it its current lease specified, and waits for a reply. | **Client Receives DHCPACK:** The client receives a *DHCPACK* reply to its *DHCPREQUEST.* Its lease is renewed, it restarts the *T1* and *T2* timers, and returns to the *BOUND* state. |
| | | **Client Receives *DHCPNAK:*** The server has refused to renew the client's lease. The client goes to the *INIT* state to get a new lease. |
| | | **Rebinding Timer (*T2*) Expires:** While attempting to renew its lease, the T2 timer expires, indicating that the renewal period has ended. The client transitions to the *REBINDING* state. |
| ***REBINDING*** | The client has failed to renew its lease with the server that originally granted it, and now seeks a lease extension with any server that can hear it. It periodically sends *DHCPREQUEST* messages with no server specified until it gets a reply or the lease ends. | **Client Receives DHCPACK:** Some server on the network has renewed the client's lease. The client binds to the new server granting the lease, restarts the *T1* and *T2* timers, and returns to the *BOUND* state. |
| | | **Client Receives *DHCPNAK:*** A server on the network is specifically telling the client it needs to restart the leasing process. This may be the case if a new server is willing to grant the client a lease, but only with terms different than the client's current lease. The client goes to the *INIT* state. |
| | | **Lease Expires:** The client receives no reply prior to the expiration of the lease. It goes back to the *INIT* state. |

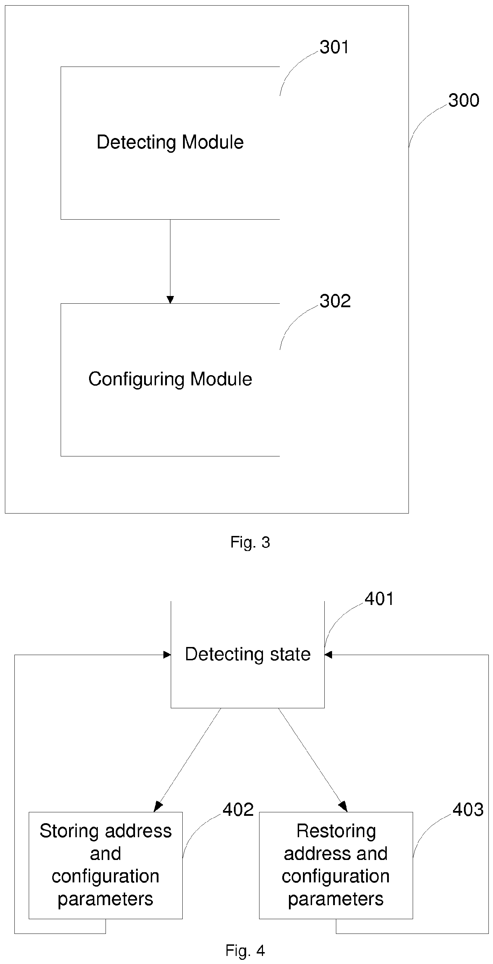

Fig. 3 is a block diagram of the DHCP client for configuring DHCP related configuration parameters according to an embodiment of present invention. The DHCP client 300 comprises a detecting module 301 and a configuring module 302. The detecting module 301 is adapted to detect or determine the current state of the DHCP client, and inform the configuring module 302 of the state. And the configuring module 302 is adapted to, in response to the state informed by the detecting module 301, perform configuration of the DHCP client. Specifically, in an embodiment of present invention which will be also described in detailed in conjunction with a method flow chart, the detecting module 301 is used to detect the states of Bound and Selecting of the DHCP client; and the configuring module 302 is used to 1) in response to the change to the Bound state, save and store the network address and other DHCP parameters as conveyed by DHCP server in DHCP options for configuring the DHCP client (which is defined in RFC 2132 DHCP Options and BOOTP Vendor Extensions); and 2) in response to change to the Selecting state, configure the DHCP client with the stored network address and other DHCP parameters. As a result, even if the DHCP client is at the state of Selecting, the DHCP client is still able to get itself configured so as to communicate with other data servers, e.g. VoD server. The merit is that the deployment of detecting module 301 and the configuring module 302 does not modify the DHCP protocols as used in the DHCP client. In other words, when the configuring module 302 configures the DHCP client with its stored network address and other DHCP parameters, it does not change the state of DHCP client. When the communication between the DHCP client and the DHCP server is restored, the DHCP client will transition from the Selecting state to the Bound state through Requesting state. The network address and other DHCP parameters as conveyed in the DHCP options by the DHCP server during the transition are used to configure the DHCP client, and consequently substitute the previous values as restored/configured by the configuring module 302.

It shall note the other DHCP parameters to be stored by the configuring module 302 vary with the purpose of the implementations by a person skilled in the art. The other DHCP parameters include subnet mask, router, domain name server, Network Time Protocol (NTP) server etc. In one embodiment, all DHCP parameters as conveyed by the DHCP server in the DHCP options of the DHCPOFFER message are stored in the state of Bound, and restored in the state of Selecting of the DHCP client. However, in other embodiment, only some DHCP parameters are stored in Bound state and restored in Selecting state. For example, the subnet mask, router, NTP server and domain name server are stored. In another variant embodiment, routing parameters that are used to generate routing entries in the routing table of the DHCP client is stored. In an exemplary embodiment, the routing parameters include tag 3 (Router) as defined in RFC2132 for DHCP Options, tag 33 (Static Route) as defined in RFC2132 for DHCP Options and tag 121 (Classless Static Route Option) as defined in RFC3442 for DHCP Options. Herein, as an example, each of the routing entries in the routing table consists of parameters of "Destination Prefix", "Gateway IP", "Interface ID" and "Route Metric". An instance of a routing entry is "20.0.0.0/24", "10.0.0.254", "Ian1", "0".

According to another embodiment of present invention, in order to address the potential IP address confliction after the DHCP client is configured at the state of Selecting, the configuring module 302 performs address confliction detection to detect if the address is used by other DHCP client or not. It can be implemented by sending ping packet to the network address that the DHCP client is using. If no response is received, it means the address is available to be used by the DHCP client. Or otherwise, the configuring module 302 will change the stored address, for example by increasing or decreasing the stored address with one step (e.g. 1) and repeat the address confliction detection until receiving no response.

Fig. 4 is a flow chart illustrating a method for configuring DHCP client when the DHCP client fails to renew its lease according to the embodiment of present invention.

In the step 401, after the DHCP client obtains network address and other configuration parameters from DHCP server for the first time, the detecting module 301 detects the state of the DHCP client by IPC (Interprocess communication) or socket. In a variant embodiment, the operation system level has a data field or a register to record the state of DHCP client. The detecting module can query from the data field or the register. In another variant embodiment, each time the state of DHCP client changes, the program process in charge of Finite State Machine of DHCP client notifies the detecting module of such change.

In the step 402, if it is detected the DHCP client is changed to the state of Bound, the configuring module 302 stores the network address and at least one of configuration parameters conveyed in the DHCP options by DHCP server. The configuration parameters include DNS server, NTP server, router, subnet mask. In a variant embodiment, the at least one of configuration parameters is routing parameters.

In the step 403, if it is detected the DHCP client is changed to the state of Selecting, the configuring module 302 restored the stored network address and the stored at least one of configuration parameters without changing the state of DHCP client.

In another embodiment of present invention, after restoring step 403, the configuring module 302 performs address confliction detection using the same approach as described above. If detecting confliction by receiving response, the configuring module 302 will change network address and then perform the restoring step 403 again.

Although the above embodiments are described in IP network, a person skilled in art shall know that the principle of present invention can also be used for the ADSL Modem, access routers, some device with high stability requirement (such as a PC Server).

## Claims

1. A method for configuring a DHCP client, comprising in response to a detection of a transition to Bound state of the DHCP client, storing network address and at least one of configuration parameters of the DHCP client, which is allocated by a DHCP server; and
when the DHCP server is unreachable, in response to transition to Selecting state, restoring the DHCP client with stored network address and stored at least one of configuration parameters without changing the Selecting state of the DHCP client.

2. The method of the claim 1, further comprising
detecting whether the network address is used by other DHCP client or not;
in response to detection that the network address is used by the other DHCP client, changing the network address;
repeating above detecting and changing steps until there is no response indicating the network address has been used; and
restoring the DHCP client with the changed network address.

3. The method of the claim 1 or 2, wherein, the configuration parameters comprises routing parameters, NTP server, DNS server, subnet mask.

4. The method of any of the claims 1 to 3, further comprising
when communication between the DHCP client and the DHCP server is restored from the unreachable, changing from the Selecting state to the Bound state after the DHCP client has a valid lease of network address from the DHCP server.

5. A DHCP client apparatus, comprising
a configuring module for, in response to a detection of a transition to Bound state of the DHCP client storing network address and at least one of configuration parameters of the DHCP client, which is allocated by a DHCP server; and
when the DHCP server is unreachable, in response to transition to Selecting state, restoring the DHCP client with stored network address and stored at least one of configuration parameters without changing the Selecting state of the DHCP client.

6. The apparatus of the claim 5, wherein the configuration module is further configured to detect whether the network address is used by other DHCP client or not; in response to detection that the network address is used by the other DHCP client, change the network address; repeat above detecting and changing steps until there is no response indicating the network address has been used; and restore the DHCP client with the changed network address.

7. The apparatus of claim 5 or 6, wherein, the configuration parameters comprises routing parameters, NTP server, DNS server, subnet mask.

8. The apparatus of any of the claims 5 to 7, wherein the configuration module is further configured to, when communication between the DHCP client and the DHCP server is restored from the unreachable, change from the Selecting state to the Bound state after the DHCP client has a valid lease of network address from the DHCP server.

## Patentansprüche

1. Verfahren zum Konfigurieren eines DHCP-Clients, wobei das Verfahren umfasst:
Speichern einer Netzadresse und mindestens eines von Konfigurationsparametern des DHCP-Clients, die durch einen DHCP-Server zugeordnet werden, als Reaktion auf die Detektion eines Übergangs des DHCP-Clients in den Bound-Zustand; und
Wiederherstellen des DHCP-Clients mit der gespeicherten Netzadresse und den gespeicherten mindestens einen der Konfigurationsparameter, ohne den Selecting-Zustand des DHCP-Clients zu ändern, wenn der DHCP-Server unerreichbar ist, als Reaktion auf den Übergang in den Selecting-Zustand.

2. Verfahren nach Anspruch 1, das ferner umfasst:
Detektieren, ob die Netzadresse durch einen anderen DHCP-Client verwendet wird;
Ändern der Netzadresse als Reaktion auf die Detektion, dass die Netzadresse durch den anderen DHCP-Client verwendet wird;
Wiederholen der obigen Schritte des Detektierens und des Änderns, bis es keine Antwort gibt, die angibt, dass die Netzadresse verwendet worden ist; und
Wiederherstellen des DHCP-Clients mit der geänderten Netzadresse.

3. Verfahren nach Anspruch 1 oder 2, wobei die Konfigurationsparameter Routing-Parameter, einen NTP-Server, einen DNS-Server, eine Subnetzmaske umfassen.

4. Verfahren nach einem der Ansprüche 1 bis 3, wobei das Verfahren ferner umfasst:
Wechseln von dem Selecting-Zustand zu dem Bound-Zustand, nachdem der DHCP-Client eine gültige Lease der Netzadresse von dem DHCP-Server besitzt, wenn die Kommunikation zwischen dem DHCP-Client und dem DHCP-Server von der unerreichbaren wiederhergestellt wird.

5. DHCP-Client-Vorrichtung, die umfasst:
ein Konfigurationsmodul, um als Reaktion auf die Detektion eines Übergangs des DHCP-Clients in den Bound-Zustand eine Netzadresse und mindestens einen von Konfigurationsparametern des DHCP-Clients, die durch einen DHCP-Server zugeordnet werden, zu speichern; und
Wiederherstellen des DHCP-Clients mit der gespeicherten Netzadresse und den gespeicherten mindestens einen der Konfigurationsparameter, ohne den Selecting-Zustand des DHCP-Clients zu ändern, wenn der DHCP-Server unerreichbar ist, als Reaktion auf den Übergang in den Selecting-Zustand.

6. Vorrichtung nach Anspruch 5, wobei das Konfigurationsmodul ferner dafür konfiguriert ist zu detektieren, ob die Netzadresse durch einen anderen DHCP-Client verwendet wird; als Reaktion auf die Detektion, dass die Netzadresse durch den anderen DHCP-Client verwendet wird, die Netzadresse zu ändern; die obigen Schritte des Detektierens und des Änderns zu wiederholen, bis es keine Antwort gibt, die angibt, dass die Netzadresse verwendet worden ist; und den DHCP-Client mit der geänderten Netzadresse wiederherzustellen.

7. Vorrichtung nach Anspruch 5 oder 6, wobei die Konfigurationsparameter Routing-Parameter, einen NTP-Server, einen DNS-Server, eine Subnetzmaske umfassen.

8. Vorrichtung nach einem der Ansprüche 5 bis 7, wobei das Konfigurationsmodul ferner dafür konfiguriert ist, von dem Selecting-Zustand zu dem Bound-Zustand zu wechseln, nachdem der DHCP-Client eine gültige Lease der Netzadresse von dem DHCP-Server besitzt, wenn die Kommunikation zwischen dem DHCP-Client und dem DHCP-Server von der unerreichbaren wiederhergestellt wird.

## Revendications

1. Procédé de configuration d'un client DHCP comprenant, en réponse à une détection d'une transition vers un état de liaison du client DHCP, le stockage de l'adresse réseau et d'au moins l'un des paramètres de configuration du client DHCP, qui est alloué par un serveur DHCP ; et, lorsque le serveur DHCP est inaccessible, en réponse à la transition vers un état de sélection, la restauration du client DHCP avec l'adresse réseau stockée et le au moins un des paramètres de configuration stocké sans changement de l'état de sélection du client DHCP.

2. Procédé selon la revendication 1, comprenant en outre les étapes consistant à :
détecter si l'adresse réseau est utilisée par un autre client DHCP ou non ; en réponse à la détection de l'utilisation de l'adresse réseau par l'autre client DHCP, modifier l'adresse réseau ;
répéter les étapes de détection et de modification ci-dessus jusqu'à l'absence de réponse indiquant que l'adresse réseau a été utilisée ; et restaurer le client DHCP avec l'adresse réseau modifiée.

3. Procédé selon la revendication 1 ou 2, dans lequel les paramètres de configuration comprennent des paramètres de routage, un serveur NTP, un serveur DNS et un masque de sous-réseau.

4. Procédé selon l'une quelconque des revendications 1 à 3, comprenant en outre, lorsque la communication entre le client DHCP et le serveur DHCP est restaurée à partir de l'état inaccessible, le passage de l'état de sélection à l'état de liaison une fois que le client DHCP a obtenu un bail valide d'adresse réseau du serveur DHCP.

5. Appareil de client DHCP, comprenant
un module de configuration pour, en réponse à une détection d'une transition vers un état de liaison du client DHCP, stocker l'adresse réseau et au moins l'un des paramètres de configuration du client DHCP, qui est alloué par un serveur DHCP ; et, lorsque le serveur DHCP est inaccessible, en réponse à la transition vers un état de sélection, restaurer le client DHCP avec l'adresse réseau stockée et le au moins un des paramètres de configuration stocké sans changer l'état de sélection du client DHCP.

6. Appareil selon la revendication 5, dans lequel le module de configuration est en outre configuré pour détecter si l'adresse réseau est utilisée ou non par un autre client DHCP ; en réponse à la détection de l'utilisation de l'adresse réseau par l'autre client DHCP, modifier l'adresse réseau ; répéter les étapes de détection et de modification ci-dessus jusqu'à l'absence de réponse indiquant que l'adresse réseau a été utilisée ; et restaurer le client DHCP avec l'adresse réseau modifiée.

7. Appareil selon la revendication 5 ou 6, dans lequel les paramètres de configuration comprennent des paramètres de routage, un serveur NTP, un serveur DNS et un masque de sous-réseau.

8. Appareil selon l'une quelconque des revendications 5 à 7, dans lequel le module de configuration est en outre configuré pour, lorsque la communication entre le client DHCP et le serveur DHCP est restaurée à partir de l'état inaccessible, passer de l'état de sélection à l'état de liaison une fois que le client DHCP a obtenu un bail valide d'adresse réseau du serveur DHCP.
